# EUROPEAN PATENT APPLICATION

(11) **EP 4 717 942 A1**
(43) Date of publication of application: **01.04.2026**
(21) Application number: 24306574.5
(22) Date of filing: 26.09.2024
(51) Int. Cl.: F16F 1/04, F16F 1/06

(54) **COIL COMPRESSION SPRING**

(71) Applicant: ALSTOM Holdings, 93400 Saint-Ouen-sur-Seine (FR)
(72) Inventor: Gueltekin, Sinan, 45661 Recklinghausen (DE); Stoessel, Lucien, 8057 Zurich (CH)
(74) Representative: Zimmermann & Partner Patentanwälte mbB

(57) **Abstract**

The invention relates to a coil compression spring (1) for a suspension of a vehicle, wherein the first end coil section (10) continuously tapers from the central section (18) towards the first tip (14) such that the first end coil section (10) comprises a planished first top surface (40) and a planished first bottom surface (42), and wherein the second end coil section (12) continuously tapers from the central section (18) towards the second tip (16) such that the second end coil section (12) comprises a planished second top surface (44) and a planished second bottom surface (46), wherein the first length (20) of the first end coil section (10) extends along more than one winding (3) and at most two windings (3) of the coil compression spring (1), wherein the second length (22) of the second end coil section (12) extends along more than one winding (3) and at most two windings (3) of the coil compression spring (1).

## Description

Coil compression springs (helical compression springs) are for instance used in connection with running gears of a rail vehicle, e.g. bogies of rail vehicles or single-axle running gears. Coil compression springs are also used in connection with the suspensions for trucks. Those springs can be subject to heavy loads.

Typically, the coil compression springs are covered by a protective coating, e.g. for corrosion protection. When stressed, e.g. by loads, coils (windings) of the coil compression spring can come into contact with each other. This can lead to a damage of the protective coating. The protection is reduced and the coil compression spring can corrode or otherwise be damaged. Consequently, the coil compression spring has to be replaced. This results in downtimes of the relating vehicle.

Hence, there is a need for a coil compression spring with extended lifetime.

This problem is solved by the coil compression spring according to claim 1. Further embodiments are described in the sub-claims.

A first aspect of the invention relates to a coil compression spring for a suspension of a vehicle. The coil compression spring comprises, along its coiling direction, a first end coil section having a first tip, a second end coil section having a second tip, and a central coil section connecting the first end coil section and the second end coil section. The coil compression spring is formed by a wound spring rod extending from the first tip to the second tip along the coiling direction. The central section has a circular cross section with a central diameter. The first end coil section has a first length and continuously tapers along the first length from the central section towards the first tip such that the first end coil section comprises a planished first top surface and a planished first bottom surface. The second end coil section has a second length and continuously tapers along the second length from the central section towards the second tip such that the second end coil section comprises a planished second top surface and a planished second bottom surface. The first length of the first end coil section extends along more than one winding of the coil compression spring and at most two windings of the coil compression spring, so that the first bottom surface partially overlaps the first top surface in a first overlapping region, wherein a portion of the planished first top surface and a portion of the planished first bottom surface adjoin each other, when the coil compression spring is loaded with a preload force. The second length of the second end coil section extends along more than one winding of the coil compression spring and at most two windings of the coil compression spring, so that the second bottom surface partially overlaps the second top surface in a second overlapping region, wherein a portion of the planished second top surface and a portion of the planished second bottom surface adjoin each other, when the coil compression spring is loaded with the preload force.

In an embodiment, the invention relates to a coil compression spring for a suspension of a running gear of a vehicle. In an embodiment, the suspension of the vehicle comprises or consists of a suspension of a running gear of a vehicle.

In an embodiment, the invention relates to a coil compression spring for a suspension of a running gear of a rail car body. In an embodiment, the suspension of a vehicle can comprise or consist of a suspension of a running gear of a rail car body. In an embodiment, the suspension of a vehicle can be a primary suspension. In an embodiment, the suspension of a vehicle can be a secondary suspension. The primary suspension can carry the bogie frame.

The suspension of the running gear can be a primary suspension. The suspension of the running gear can be a secondary suspension. The running gear can be a single-axle running gear. The running gear can be a bogie.

In an embodiment, the invention relates to a coil compression spring for a suspension of a car. In an embodiment, the invention relates to a coil compression spring for a suspension of a running gear of a car.

In an embodiment, the invention relates to a coil compression spring for a suspension of a truck. In an embodiment, the invention relates to a coil compression spring for a suspension of a running gear of a truck.

In an embodiment, the invention relates to a coil compression spring for a suspension of a bus. In an embodiment, the invention relates to a coil compression spring for a suspension of a running gear of a bus.

The coiling direction can be the winding direction of the spring rod of the coil compression spring.

Perpendicular to the coiling direction, the central section can have the circular cross section with the central diameter.

The first end coil section can taper (flatten, diminish gradually) from the central section towards the first tip. The height of the first end section can decreases from central section towards the first tip. The height of the first end section can steadily decreases from central section towards the first tip. The shape of cross section can change from a circle (at central section) towards a pill-shape at the first tip.

The first end coil section can continuously taper. The first end coil section can taper without steps from the central section towards the first tip.

The second end coil section can taper (flatten, diminish gradually) from the central section towards the second tip. The height of the second end section can decreases from central section towards the second tip. The height of the second end section can steadily decreases from central section towards the second tip. The shape of cross section can change from a circle (at central section) towards a pill-shape at the second tip.

The second end coil section can continuously taper. The second end coil section can taper without steps from the central section towards the second tip.

The first length of the first end coil section extends along more than one winding (coils, turns, bends) of the coil compression spring and at most two windings of the coil compression spring. The first length of the first end coil section extends along at least one winding (coils, turns, bends) of the coil compression spring and at most two windings of the coil compression spring. The first length of the first end coil section can extend along at least 360 ° of the coil compression spring and at most 720 °of the coil compression spring. The first length of the first end coil section extends along more than one winding of the coil compression spring and less than two windings of the coil compression spring.

The second length of the second end coil section extends along more than one winding (coils, turns, bends) of the coil compression spring and at most two windings of the coil compression spring. The second length of the second end coil section extends along at least one winding (coils, turns, bends) of the coil compression spring and at most two windings of the coil compression spring. The second length of the second end coil section can extend along at least 360 ° of the coil compression spring and at most 720 °of the coil compression spring. The second length of the second end coil section extends along more than one winding of the coil compression spring and less than two windings of the coil compression spring.

The first length can be equal to the second length.

The end of the tapered first end coil section can be located at least one coil (360 °) and at most two coils (720 °) from the first tip. The end of the tapered second end coil section can be located at least one coil (360 °) and at most two coils (720 °) from the second tip.

The end of the first tapered portion can be located at least one coil (360 °) and at most two coils (720 °) from the first end. The end of the second tapered portion can be located at least one coil (360 °) and at most two coils (720 °) from the second end.

Along the spring axis, the first bottom surface can partially overlap the first top surface in the first overlapping region. In the first overlapping region, the first bottom surface and the first top surface can face each other.

The preload force can be the load with a tare weight.

When the coil compression spring is loaded with the preload force, the portion of the planished first top surface and the portion of the planished first bottom surface can contact each other. When the coil compression spring is loaded with the preload force, the portion of the planished first top surface and the portion of the planished first bottom surface can establish a surface-to-surface contact. When the coil compression spring is loaded with the preload force, the adjoining portions of the planished first top surface and of the planished first bottom surface can establish a closed first contact area. When the coil compression spring is loaded with the preload force, a flush closure can be established between the portion of the planished first top surface and the portion of the planished first bottom surface.

When the coil compression spring is loaded with the preload force, the portion of the planished second top surface and the portion of the planished second bottom surface can contact each other. When the coil compression spring is loaded with the preload force, the portion of the planished second top surface and the portion of the planished second bottom surface can establish a surface-to-surface contact. When the coil compression spring is loaded with the preload force, the adjoining portions of the planished second top surface and of the planished second bottom surface can establish a closed second contact area. When the coil compression spring is loaded with the preload force, a flush closure can be established between the portion of the planished second top surface and the portion of the planished second bottom surface.

In an embodiment, in the first overlapping region, the facing surfaces of the tapered first end coil section can come into contact with each other at a load which is lower than the minimum service load (particularly at a load with the tare weight), and the contact can be maintained over the whole range of service loads. In an embodiment, in the second overlapping region, the facing surfaces of the tapered second end coil section can come into contact with each other at the load which is lower than the minimum service load, and the contact can be maintained over the whole range of service loads.

In an embodiment, the coil compression spring can be configured such that the tapered portions come into contact at a load which is lower than the minimum service load, and the contact remains closed over the whole range of service loads.

An advantage can be that load can be more widely distributed. An advantage can be that the surface pressure can be more evenly distributed. An advantage can be that via the surface-to-surface contact a broader distribution of the pressure can be provided compared to a point-to-point contact (cylinder-to-cylinder contact) and/or a surface-to-point contact (surface-to-cylinder contact).

An advantage can be that the protective layer of the coil compression spring can be less stressed. The lifetime of the protective layer can advantageously be extended. Downtimes (e.g. of the running gear) can advantageously be reduced. An advantage can be that by means of flush closing and an even distribution of the surface pressure, the damage of the protective coating (e.g. corrosion protection) can be reduced. Advantageously, the durability of the coil compression spring can be increased.

The surface-to-surface contact can advantageously reduce the surface tension. An advantage can be that the destruction of the surface protection, such as the protective coating, can be reduced (particularly in comparison to a cylinder-to-cylinder contact and/or a surface-to-cylinder contact).

The first end coil section can be generated by forging. The second end coil section can be generated by forging. The first tapered portion can be generated by forging. The second tapered portion can be generated by forging. A loss of material of the spring rod can advantageously be reduced. During forging, the material of the spring can be compacted. An advantage can be that this can result in grain refinement. The surface quality can advantageously be increased.

In an embodiment, the first length of the first end coil section extends along at least 13/12 windings of the coil compression spring. In an embodiment, the first length of the first end coil section extends along at least 7/6 windings of the coil compression spring. In an embodiment, the first length of the first end coil section extends along at least 5/4 windings of the coil compression spring. In an embodiment, the first length of the first end coil section extends along at most 23/12 windings of the coil compression spring. In an embodiment, the first length of the first end coil section extends along at most 11/6 windings of the coil compression spring. In an embodiment, the first length of the first end coil section extends along at most 7/4 windings of the coil compression spring.

In an embodiment, the first length of the first end coil section extends along at least 13/12 windings of the coil compression spring and along at most 23/12 windings of the coil compression spring.

In an embodiment, the first length of the first end coil section extends along at least 7/6 windings of the coil compression spring and along at most 11/6 windings of the coil compression spring. In an embodiment, the first length of the first end coil section extends along at least 5/4 windings of the coil compression spring and along at most 7/4 windings of the coil compression spring.

In an embodiment, the second length of the second end coil section extends along at least 13/12 windings of the coil compression spring. In an embodiment, the second length of the second end coil section extends along at least 7/6 windings of the coil compression spring. In an embodiment, the second length of the second end coil section extends along at least 5/4 windings of the coil compression spring. In an embodiment, the second length of the second end coil section extends along at most 23/12 windings of the coil compression spring. In an embodiment, the second length of the second end coil section extends along at most 11/6 windings of the coil compression spring. In an embodiment, the second length of the second end coil section extends along at most 7/4 windings of the coil compression spring.

In an embodiment, the second length of the second end coil section extends along at least 13/12 windings of the coil compression spring and along at most 23/12 windings of the coil compression spring.

In an embodiment, the second length of the second end coil section extends along at least 7/6 windings of the coil compression spring and along at most 11/6 windings of the coil compression spring.

In an embodiment, the second length of the second end coil section extends along at least 5/4 windings of the coil compression spring and along at most 7/4 windings of the coil compression spring.

In an embodiment, the first length of the first end coil section extends along at least 5/4 windings of the coil compression spring and at most 7/4 windings of the coil compression spring. The first length of the first end coil section can extend along at least 450 ° of the coil compression spring and at most 630 °of the coil compression spring.

In an embodiment, the second length of the second end coil section extends along at least 5/4 windings of the coil compression spring and at most 7/4 windings of the coil compression spring. The second length of the second end coil section can extend along at least 450 ° of the coil compression spring and at most 630 °of the coil compression spring.

In an embodiment, the first length of the first end coil section extends along at least 13/12 windings of the coil compression spring and at most 23/12 windings of the coil compression spring, and the second length of the second end coil section extends along at least 13/12 windings of the coil compression spring and at most 23/12 windings of the coil compression spring.

In an embodiment, the first length of the first end coil section extends along at least 7/6 windings of the coil compression spring and at most 11/6 windings of the coil compression spring, and the second length of the second end coil section extends along at least 7/6 windings of the coil compression spring and at most 11/6 windings of the coil compression spring.

In an embodiment, the first length of the first end coil section extends along at least 5/4 windings of the coil compression spring and at most 7/4 windings of the coil compression spring, and the second length of the second end coil section extends along at least 5/4 windings of the coil compression spring and at most 7/4 windings of the coil compression spring.

In an embodiment, the first length of the first end coil section extends along at least 1,25 coils (450°) and at most 1,5 coils (540 °). In an embodiment, the second length of the second end coil section extends along at least 1,25 coils (450°) and at most 1,5 coils (540 °). In an embodiment, the first length of the first end coil section extends along at least 1,25 coils (450°) and at most 1,5 coils (540 °), and the second length of the second end coil section extends along at least 1,25 coils (450°) and at most 1,5 coils (540 °).

The end of the first tapered portion can be located at least 1,25 coils (450 °) and at most 1,5 coils (540 °) from the first end. The end of the second tapered portion can be located at least 1,25 coils (450 °) and at most 1,5 coils (540 °) from the second end.

The first overlapping region and/or the second overlapping region can advantageously be increased. The portion of the planished first top surface and the portion of the planished first bottom surface which adjoin each other, when the coil compression spring is loaded with the preload force, can be increased. The portion of the planished second top surface and the portion of the planished second bottom surface which adjoin each other, when the coil compression spring is loaded with the preload force, can be increased.

Advantageously, the contact area between the respective surfaces can be increased. An advantage can be that the surface pressure can be more evenly distributed.

In an embodiment, the forging length of a coil spring bar can be increased by at least 1/2 coils (180 °) to achieve a wide surface flushness during a tare load condition in a finished coil compression spring.

In an embodiment, the first length is smaller than 30% of the total length of the spring rod in the coiling direction (distance between the first tip and the second tip). In an embodiment, the first length is smaller than 1/3 of the total length of the spring rod in the coiling direction (distance between the first tip and the second tip).

In an embodiment, the second length is smaller than 30% of the total length of the spring rod in the coiling direction (distance between the first tip and the second tip). In an embodiment, the second length is smaller than 1/3 of the total length of the spring rod in the coiling direction (distance between the first tip and the second tip).

In an embodiment, the first length is smaller than 30% of the total length of the spring rod in the coiling direction and the second length is smaller than 30% of the total length of the spring rod in the coiling direction (distance between the first tip and the second tip).In an embodiment, the first length is smaller than 1/3 of the total length of the spring rod in the coiling direction and the second length is smaller than 1/3 of the total length of the spring rod in the coiling direction (distance between the first tip and the second tip).

In an embodiment, the length of the central portion is larger than 1/3 of the total length of the spring rod in the coiling direction. In an embodiment, the length of the central portion is larger than 40% of the total length of the spring rod in the coiling direction. In an embodiment, the length of the central portion is larger than 1/2 of the total length of the spring rod in the coiling direction.

In an embodiment, a first height of the first end coil section at the first tip is between 20% and 30% of the central diameter (dc). In an embodiment, the first height of the first end coil section at the first tip is between 22% and 28% of the central diameter (dc). In an embodiment, the first height of the first end coil section at the first tip is 25% of the central diameter (dc).

In an embodiment, a second height of the second end coil section at the second tip is between 20% and 30% of the central diameter (dc). In an embodiment, the second height of the second end coil section at the second tip is between 22% and 28% of the central diameter (dc). In an embodiment, the second height of the second end coil section at the second tip is 25% of the central diameter (dc).

In an embodiment, the first height and the second height are between 20% and 30% of the central diameter (dc). In an embodiment, the first height and the second height are between 22% and 28% of the central diameter (dc). In an embodiment, the first height and the second height are 25% of the central diameter (dc).

In an embodiment, the first height and the second height are equal.

An advantage can be that the spring rod is easy to handle, e.g. to grasp, at the first tip. An advantage can be that the spring rod is easy to handle, e.g. to grasp, at the second tip.

An advantage can be that the decrease of the height to a quarter of the central diameter can provide a compression spring coil with a linear characteristic.

In an embodiment, the height of the first end coil section decreases continuously from the central section towards the first tip. In an embodiment, the height of the second end coil section decreases continuously from the central section towards the second tip.

In an embodiment, the width (extension in transverse direction; perpendicular to the height) of the spring rod is almost constant along the entire length of the spring rod (between the first tip and the second tip). In an embodiment, the width of the spring rod is almost constant along the coiling direction. In an embodiment, the width of the spring rod remains almost constant even if the height of the spring rod changes.

In an embodiment, a length of the first overlapping region is at least 1/3 of a median spring diameter of the coil compression spring, when the coil compression spring is loaded with the preload force.

In an embodiment, a length of the second overlapping region is at least 1/3 of a median spring diameter of the coil compression spring, when the coil compression spring is loaded with the preload force.

In an embodiment, the length of the first overlapping region is at least 1/3 of a median spring diameter of the coil compression spring, when the coil compression spring is loaded with the preload force, and the length of the second overlapping region is at least 1/3 of a median diameter of the coil compression spring, when the coil compression spring is loaded with the preload force.

In an embodiment, the length of the first overlapping region and the length of the second overlapping region are equal.

The median spring diameter can be defined by the central line of the coil compression spring.

In an embodiment, the first overlapping region starts 1/3 coils downstream (along the coiling direction) of the first tip. The first overlapping region can start 1/3 coil downstream of the first tip and can end at the end of the first end coil section.

In an embodiment, the second overlapping region starts 1/3 coils downstream (along the coiling direction) of the second tip. The second overlapping region can start 1/3 coil downstream of the second tip and can end at the end of the second end coil section.

In an embodiment, the length of the first overlapping region is at least 20 mm, when the coil compression spring is loaded with the preload force. In an embodiment, the length of the second overlapping region is at least 20 mm, when the coil compression spring is loaded with the preload force.

An advantage can be that the surface pressure can be more evenly distributed.

In an embodiment, the coil compression spring is configured such that it has a linear spring characteristic, particularly a linear spring characteristic between minimum and maximum operating spring force.

In an embodiment, the minimum operating spring force can be between 500 N and 10000 N. In an embodiment, the maximum operating spring force can be between 10000 N and 150000 N.

An advantage can be that the behaviour of the coil compression spring is uniform and, in particular, that there are no sudden changes in the behaviour of the coil compression spring.

In an embodiment, the first end coil section monotonously tapers from the central section towards the first tip. In an embodiment, the first end coil section strictly monotonously tapers from the central section towards the first tip.

In an embodiment, the second end coil section monotonously tapers from the central section towards the second tip. In an embodiment, the second end coil section strictly monotonously tapers from the central section towards the second tip.

In an embodiment, the first end coil section monotonously tapers from the central section towards the first tip and the second end coil section monotonously tapers from the central section towards the second tip. In an embodiment, the first end coil section strictly monotonously tapers from the central section towards the first tip and the second end coil section strictly monotonously tapers from the central section towards the second tip.

The tapering of the first end coil section can be monotonous. The tapering of the first end coil section can be strictly monotonous. The tapering of the second end coil section can be monotonous. The tapering of the second end coil section can be strictly monotonous.

In an embodiment, the first end coil section has a trapezoid shape. In an embodiment, the first end coil section has an equilateral trapezoid shape. In an embodiment, the second end coil section has a trapezoid shape. In an embodiment, the second end coil section has an equilateral trapezoid shape.

In an embodiment, the slope of the planished first top surface equals the slope of the planished second top surface. In an embodiment, the slope of the planished first bottom surface equals the slope of the planished second bottom surface.

In an embodiment, the absolute value of the slope of the planished first top surface equals the absolute value of the slope of the planished first bottom surface. In an embodiment, the absolute value of the slope of the planished second top surface equals the absolute value of the slope of the planished second bottom surface.

In an embodiment the slope of the planished first top surface is constant over the entire length of the first end coil section. In an embodiment the slope of the planished first bottom surface is constant over the entire length of the first end coil section.

In an embodiment the slope of the planished second top surface is constant over the entire length of the second end coil section. In an embodiment the slope of the planished second bottom surface is constant over the entire length of the second end coil section.

In an embodiment, the first end coil section comprises a first intermediate portion arranged between the first tip and the first overlapping region, wherein the first intermediate portion is equal or smaller than 1/3 of a coiling. In an embodiment, the second end coil section comprises a second intermediate portion arranged between the second tip and the second overlapping region, wherein the second intermediate portion is equal or smaller than 1/3 of a coiling.

In an embodiment, the first end coil section comprises the first intermediate portion arranged between the first tip and the first overlapping region, wherein the first intermediate portion is equal or smaller than 1/3 of a coiling, and the second end coil section comprises the second intermediate portion arranged between the second tip and the second overlapping region, wherein the second intermediate portion is equal or smaller than 1/3 of a coiling.

In an embodiment, a length (along the coiling direction) of the first intermediate portion is equal or smaller than 1/3 of a coiling. In an embodiment, a length (along the coiling direction) of the second intermediate portion is equal or smaller than 1/3 of a coiling.

In an embodiment, the first intermediate portion extends from the first tip to the first overlapping region. In an embodiment, the second intermediate portion extends from the second tip to the second overlapping region.

In an embodiment, the coil compression spring extends along a spring axis, wherein a height of the coil compression spring along the spring axis is between 50 mm and 400 mm, when the coil compression spring is loaded with a maximum load.

In an embodiment, the height of the coil compression spring is between 100 mm and 600 mm, when the coil compression spring is loaded with the preload force.

In an embodiment, the height of the coil compression spring is between 150 mm and 1000 mm, when the coil compression spring is unloaded.

In an embodiment, when the coil compression spring is unloaded, neither the maximum load nor the preload force is applied to the coil compression spring.

The maximum load can be greater than the tare weight.

An advantage can be that the height is reduced. This can save installation space.

In an embodiment, the coil compression spring extends along a spring axis and an outer diameter of the coil compression spring is constant along the spring axis.

In an embodiment, an inner diameter of the coil compression spring is constant along the spring axis.

In an embodiment, the portion of the planished first top surface and the portion of the planished first bottom surface establish a flush closure, when the coil compression spring is loaded with the preload force, and the portion of the planished second top surface and the portion of the planished second bottom surface establish a further flush closure, when the coil compression spring is loaded with the preload force.

In an embodiment, in the first overlapping region, the facing surfaces of the tapered first end coil section can come into contact with each other at a load with the tare weight. The contact between the facing planished surfaces of the tapered first end coil section can be maintained when the spring is loaded with a service load greater than the tare weight. In an embodiment, in the second overlapping region, the facing surfaces of the tapered second end coil section can come into contact with each other at a load with the tare weight. The contact between the facing planished surfaces of the tapered second end coil section can be maintained when the spring is loaded with a service load greater than the tare weight.

In an embodiment, the central diameter (dc) is between 50 mm and 600 mm, particularly between 75 mm and 500 mm, particularly between 100 mm and 300 mm.

A second aspect of the invention relates to a method for producing a coil compression spring according the invention, comprising:
- providing a spring rod, comprising a first tip, a second tip, and a central section connecting the first tip and the second tip,
- generating a forged spring rod by forging a first end coil section of the spring rod and a second end coil section of the spring rod such that the first end coil section of the forged spring rod has a first length and continuously tapers along the first length from the central section towards the first tip such that the first end coil section comprises a planished first top surface and a planished first bottom surface, and such that the second end coil section continuously tapers from the central section towards the second tip such that the second end coil section comprises a planished second top surface and a planished second bottom surface,
- heating the forged spring rod,
- coiling the forged spring rod to form the coil compression spring, such that at more than one winding of the coil compression spring and at most two windings of the coil compression spring are formed by the first end coil section, and more than one winding of the coil compression spring and at most two windings of the coil compression spring are formed by the second end coil section.

An advantage of forging can be that a loss of material of the spring rod can advantageously be reduced.

In an embodiment, the first end coil section of the spring rod is forged such that more than one winding of the coil compression spring and at most two windings of the coil compression spring are formed by the first end coil section.

In an embodiment, the second end coil section of the spring rod is forged such that more than one winding of the coil compression spring and at most two windings of the coil compression spring are formed by the first end coil section.

In an embodiment, the first end coil section of the spring rod is forged such that at least 5/4 windings of the coil compression spring and at most 7/4 windings of the coil compression spring are formed by the first end coil section.

In an embodiment, the second end coil section of the spring rod is forged such that at least 5/4 windings of the coil compression spring and at most 7/4 windings of the coil compression spring are formed by the second end coil section.

In an embodiment, the first end coil section of the spring rod is forged such that at least 13/12 windings of the coil compression spring and at most 23/12 windings of the coil compression spring are formed by the first end coil section.

In an embodiment, the second end coil section of the spring rod is forged such that at least 13/12 windings of the coil compression spring and at most 23/12 windings of the coil compression spring are formed by the second end coil section.

In an embodiment, the first end coil section of the spring rod is forged such that at least 7/6 windings of the coil compression spring and at most 11/6 windings of the coil compression spring are formed by the first end coil section.

In an embodiment, the second end coil section of the spring rod is forged such that at least 7/6 windings of the coil compression spring and at most 11/6 windings of the coil compression spring are formed by the second end coil section.

In an embodiment, the first end coil section of the spring rod is forged such that at least 1,25 windings of the coil compression spring and at most 1,5 windings of the coil compression spring are formed by the first end coil section. In an embodiment, the second end coil section of the spring rod is forged such that at least 1,25 windings of the coil compression spring and at most 1,5 windings of the coil compression spring are formed by the second end coil section.

Forging can compact the material of the spring rod. Forging can compact the material of the spring. An advantage can be that this can result in grain refinement. The surface quality can advantageously be increased.

Continuous forging can be carried out easily. An advantage can be that the generation of the spring can be simple and does not require any unusual equipment.

A third aspect of the invention relates to a running gear of a vehicle comprising at least one coil compression spring according to the invention.

A further aspect of the invention relates to a running gear of a rail car body comprising at least one coil compression spring according to the invention.

A further aspect of the invention relates to a running gear of a car comprising at least one coil compression spring according to the invention. A further aspect of the invention relates to a running gear of a truck comprising at least one coil compression spring according to the invention. A further aspect of the invention relates to a running gear of a bus comprising at least one coil compression spring according to the invention. A further aspect of the invention relates to a running gear of a rail vehicle comprising at least one coil compression spring according to the invention.

A further aspect of the invention relates to a suspension of a vehicle comprising at least one coil compression spring according to the invention. A further aspect of the invention relates to a suspension of a running gear of a rail car body comprising at least one coil compression spring according to the invention. A further aspect of the invention relates to a suspension of a running gear of a rail vehicle comprising at least one coil compression spring according to the invention. A further aspect of the invention relates to a suspension of a running gear of a car comprising at least one coil compression spring according to the invention. A further aspect of the invention relates to a suspension of a running gear of a truck comprising at least one coil compression spring according to the invention. A further aspect of the invention relates to a suspension of a running gear of a bus comprising at least one coil compression spring according to the invention.

In an embodiment, the running gear can be a bogie. In an embodiment, the running gear can be a single-axle running gear.

The suspension can be a primary suspension. The suspension can be a secondary suspension. In an embodiment, the primary suspension and the secondary suspension comprise at least one coil compression spring according to the invention.

In an embodiment, the primary suspension of the bogie comprises or consists of at least one coil compression spring according to the invention. In an embodiment, the secondary suspension of the bogie comprises or consists of at least one coil compression spring according to the invention.

In an embodiment, each primary suspension of the bogie comprises or consists of at least one coil compression spring according to the invention. In an embodiment, each secondary suspension of the bogie comprises or consists of at least one coil compression spring according to the invention. In an embodiment, each primary suspension of the bogie and each secondary suspension of the bogie comprises or consists of at least one coil compression spring according to the invention.

In an embodiment, each primary suspension of the running gear comprises or consists of at least one coil compression spring according to the invention. In an embodiment, each secondary suspension of the running gear comprises or consists of at least one coil compression spring according to the invention. In an embodiment, each primary suspension of the running gear and each secondary suspension of the running gear comprises or consists of at least one coil compression spring according to the invention.

A further aspect of the invention relates to a vehicle comprising at least one coil compression spring according to the invention and/or at least one running gear according to the invention.

A further aspect of the invention relates to a rail vehicle comprising at least one coil compression spring according to the invention and/or at least one running gear according to the invention. A further aspect of the invention relates to a car comprising at least one coil compression spring according to the invention and/or at least one running gear according to the invention. A further aspect of the invention relates to a truck comprising at least one coil compression spring according to the invention and/or at least one running gear according to the invention. A further aspect of the invention relates to a bus comprising at least one coil compression spring according to the invention and/or at least one running gear according to the invention.

The vehicle can comprise at least one suspension comprising at least one coil compression spring according to the invention. The rail vehicle can comprise at least one suspension comprising at least one coil compression spring according to the invention. The car can comprise at least one suspension comprising at least one coil compression spring according to the invention. The bus can comprise at least one suspension comprising at least one coil compression spring according to the invention. The truck can comprise at least one suspension comprising at least one coil compression spring according to the invention.

In an embodiment, each car of the rail vehicle comprises at least one coil compression spring according to the invention and/or at least one running gear according to the invention.

In an embodiment, each running gear of the vehicle comprises at least one coil compression spring according to the invention. In an embodiment, each running gear of the vehicle comprises at least one suspension (primary, secondary) comprising at least one coil compression spring according to the invention.

In an embodiment, each running gear of the rail vehicle comprises at least one coil compression spring according to the invention. In an embodiment, each running gear of the rail vehicle comprises at least one suspension (primary, secondary) comprising at least one coil compression spring according to the invention.

In the following, further features, advantages and embodiments of the present invention are explained with reference to the Figures, wherein
- Fig. 1: shows a perspective view of an illustrative example of a coil compression spring,
- Fig. 2: shows a sectional view of an exemplary coil compression spring,
- Fig. 3: shows a portion of a schematic spring rod in a top view (A), in a side view (B) and an enlarged section (C),
- Fig. 4: shows a schematic spring rod in a side view,
- Fig. 5A: shows a bottom view of a coil compression spring,
- Fig. 5B: shows a sectional side view of a portion of a schematic spring rod,
- Fig. 6A: shows a schematic comparison of a contact of an embodiment according to the invention and a contact of a prior art spring,
- Fig. 6B: shows a schematic comparison of an end portion of an embodiment according to the invention and a contact of a prior art spring, and
- Fig. 6C: shows an example of the tip of a spring rod.

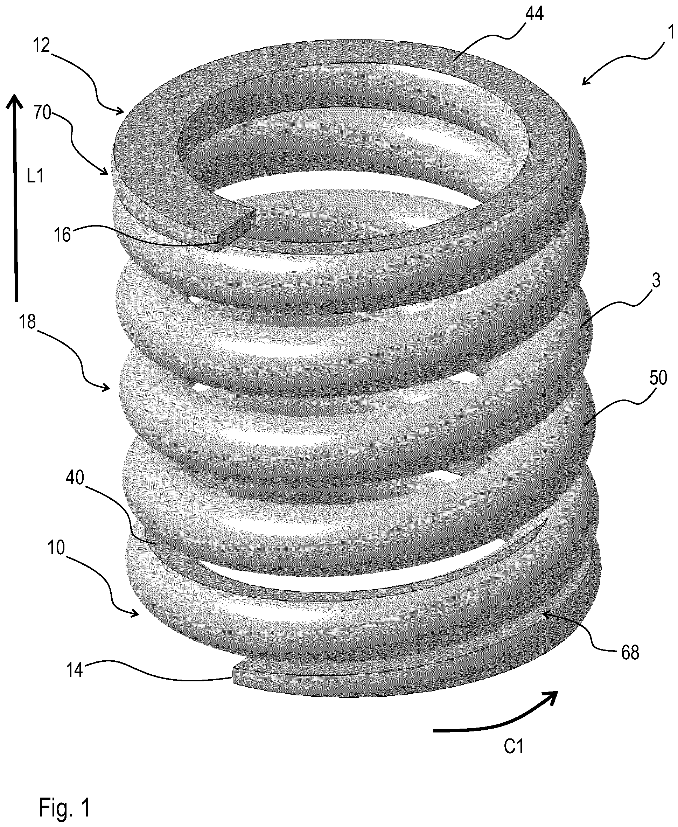

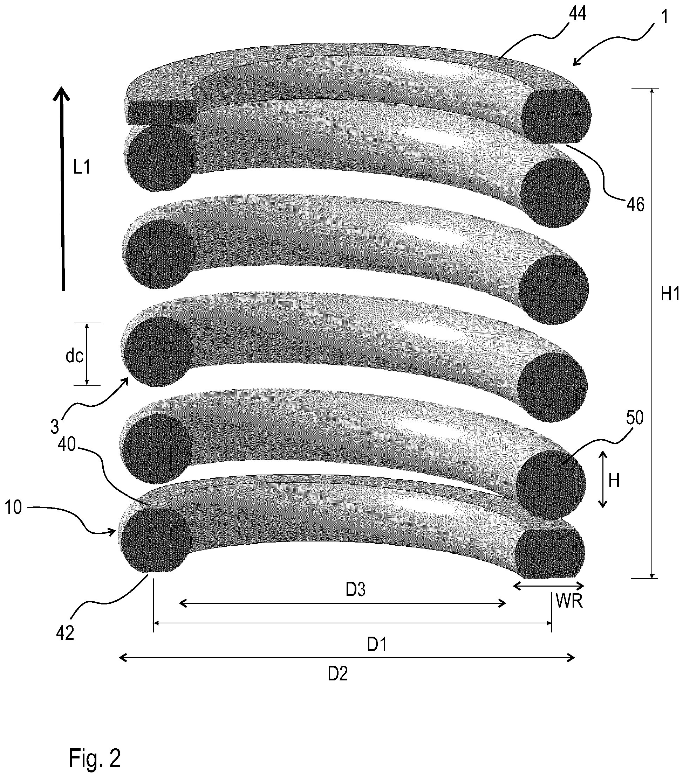

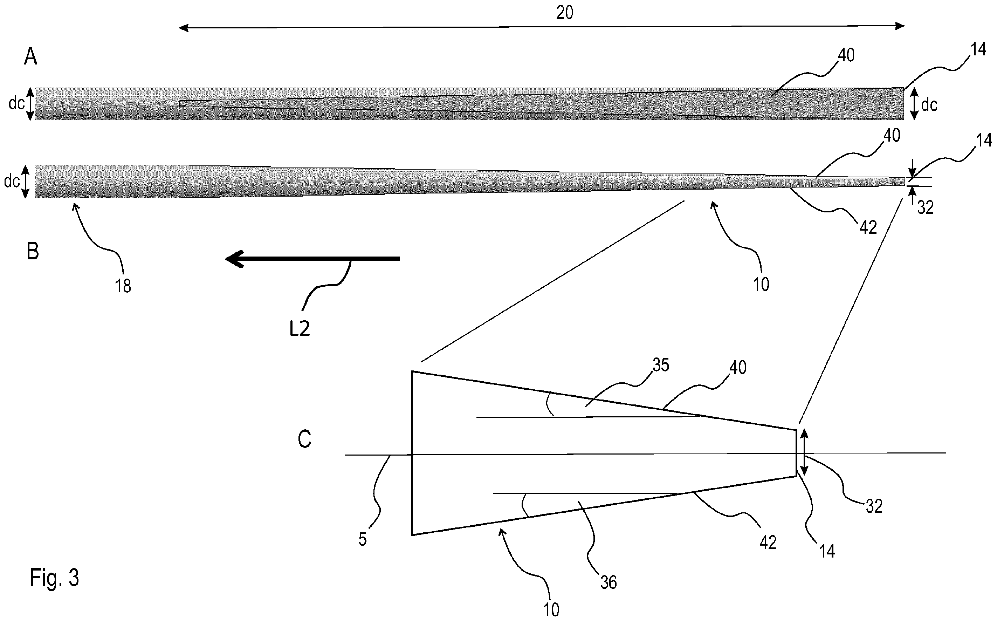

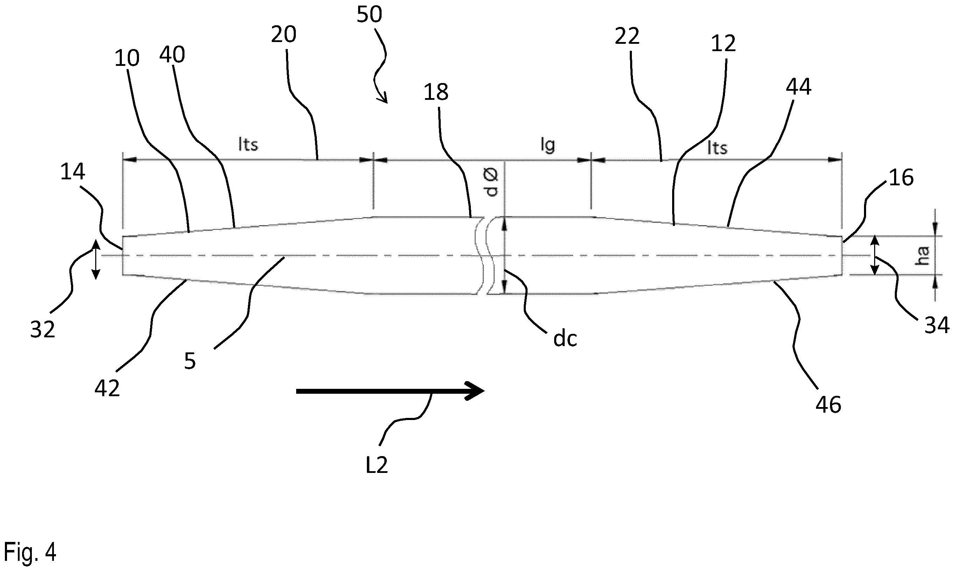

In Fig. 1, an illustrative example of a coil compression spring 1 (spring 1) is shown. In Fig. 2, a sectional view of an exemplary coil compression spring 1 is provided. The coil compression spring 1 can comprise a plurality of coils 3 (windings 3). In the example shown in Fig. 1, the coil compression spring 1 comprises six coils 3. The coil compression spring 1 can extend along a spring axis L1. The coil compression spring 1 can have a median spring diameter D1 (Fig. 2). The median spring diameter D1 can be defined by the central line 5 (also see Figs 3, 4). In the illustrated embodiment, the median spring diameter D1 can be constant along the spring axis L1. The coil compression spring 1 can have an outer spring diameter D2. The outer spring diameter D2 can be defined by the outermost surface of the coil compression spring 1. In the illustrated embodiment, the outer spring diameter D2 can be constant along the spring axis L1. The outer spring diameter D2 can be greater than the median spring diameter D1. The coil compression spring 1 can have an inner spring diameter D3. The inner spring diameter D3 can be defined by the innermost surface of the coil compression spring 1. In the illustrated embodiment, the inner spring diameter D3 can be constant along the spring axis L1. The inner spring diameter D3 can be smaller than the median spring diameter D1.

The coil compression spring 1 can be formed by a spring rod 50 which is wound. The running direction of the spring rod 50 in the coil compression spring 1 can be the coiling direction C1 of the coil compression spring 1.

The coil compression spring 1 can comprise a first end coil section 10 (also see Figs 3 to 6). The first end coil section 10 can comprise a first tip 14. The coil compression spring 1 can comprise a second end coil section 12 (also see Fig. 4). The second end coil section 12 can comprise a second tip 16. The coil compression spring 1 can comprise a central coil section 18 (also see Fig. 4). The central coil section 18 can be arranged between the first end coil section 10 and the second end coil section 12. Particularly, the central coil section 18 can connect the first end coil section 10 and the second end coil section 12. The coil compression spring 1 can consist of the first end coil section 10, the second end coil section 12 and the central coil section 18.

The first end coil section 10 can have a first length 20 (Figs 1 to 4). The first length 20 can range from the first tip 14 to the central coil section 18. The first end coil section 10 can continuously taper towards the first tip 14. The second end coil section 12 can have a second length 22. The second length 22 can range from the second tip 16 to the central coil section 18. The second end coil section 10 can continuously taper towards the second tip 16.

A height H of the spring rod 50 of the coil compression spring 1 can decrease from the central coil section 18 to the first tip 14. The height H of the spring rod 50 of the coil compression spring 1 can decrease from the central coil section 18 to the second tip 16. The height H of the spring rod 50 of the coil compression spring 1 can continuously decrease from the central coil section 18 to the first tip 14. The height H of the spring rod 50 of the coil compression spring 1 can continuously decrease from the central coil section 18 to the second tip 16. The height H of the spring rod 50 of the coil compression spring 1 can continuously decrease from the central coil section 18 to the first tip 14 and to the second tip 16. In the central coil section 18, the height H of the spring rod 50 of the coil compression spring 1 can be the central diameter dc. At the first tip 14, the height H of the spring rod 50 of the coil compression spring 1 can be the height 32 at the first tip 14. At the second tip 16, the height H of the spring rod 50 of the coil compression spring 1 can be the height 34 at the second tip 16.

The first end coil section 10 can comprise a planished first top surface 40 (Figs 1 to 4, 6A, 6B). The first end coil section 10 can comprise a planished first bottom surface 42. The planished first top surface 40 and the planished first bottom surface 42 can face away from each other.

The second end coil section 12 can comprise a planished second top surface 44 (Figs 1 to 4). The second end coil section 12 can comprise a planished second bottom surface 46. The planished second top surface 44 and the planished first bottom surface 46 can face away from each other.

In a cross sectional side view, the first end coil section 10 can have a trapezoid shape (Fig. 4). The first top surface 40 and the first bottom surface 42 can be the legs of the trapezoid. In a cross sectional side view, the second end coil section 12 can have a trapezoid shape (Fig. 4). The second top surface 44 and the second bottom surface 46 can be the legs of the trapezoid.

The cross section of the spring rod 50 of the coil compression spring 1 can change along the coiling direction C1 of the coil compression spring 1. In the central coil section 18, the spring rod 50 of the coil compression spring 1 can have a circular cross section. In the central coil section 18, the spring rod 50 of the coil compression spring 1 can have a central diameter dc.

In the first end coil section 10, a transition of the shape of the cross section can occur. The cross section of the spring rod 50 can change from a circular cross section at the central coil section 18 towards a pill shaped cross section at and/or near the first tip 14. The pill shaped cross section can mean that it comprises two parallel edges which are connected by two curved edges, particularly outwardly curved edges. One of the two parallel edges can be represented by the planished first top surface 40. The other edge of the two parallel edges can be represented by the planished first bottom surface 42.

A width WR of the spring rod 50 of the coil compression spring 1 in the central coil section 18 can be equal to the central diameter dc (e.g. Figs 1, 2, 3). A width WR of the spring rod 50 of the coil compression spring 1 at the first tip 14 can be equal to the central diameter dc. The width WR of the spring rod 50 of the coil 1 can remain constant along the coiling direction C1 of the coil compression spring 1. In an embodiment, the width of the spring rod 50 of the coil compression spring 1 remain constant along the coiling direction C1 of the coil compression spring 1 while the height H of the spring rod 50 of the coil compression spring 1 changes along the coiling direction C1, particularly decreases from the central coil section 18 towards the first tip 14 and towards the second tip 16.

The width WR of the spring rod 50 of the coil compression spring 1 can extend perpendicular to the height H of the spring rod 50 of the coil compression spring 1. The width of the spring rod 50 of the coil compression spring 1 can be the expansion of the spring rod 50 in transverse direction.

In an embodiment, in the wound state, the height H of the spring rod 50 of the coil compression spring 1 can extend along spring axis L1 of the coil compression spring 1. In an embodiment, in the wound state, the height H of the spring rod 50 of the coil compression spring 1 can extend perpendicular to the coiling direction C1.

Fig. 4 shows a schematic view of an exemplary unwound spring rod 50. Fig. 3 shows a portion of an exemplary unwound spring rod 50. In the unwound state, the spring rod 50 can extend along a longitudinal direction L2.

The spring rod 50 can extend from the first tip 14 to the second tip 16. In the unwound state, the first tip 14 and the second tip 16 can face away from each other.

The spring rod 50 can taper from the central section 18 in both directions, particularly towards the first tip 14 and towards the second tip 16. The spring rod 50 can have a symmetric cross section (see Fig. 4).

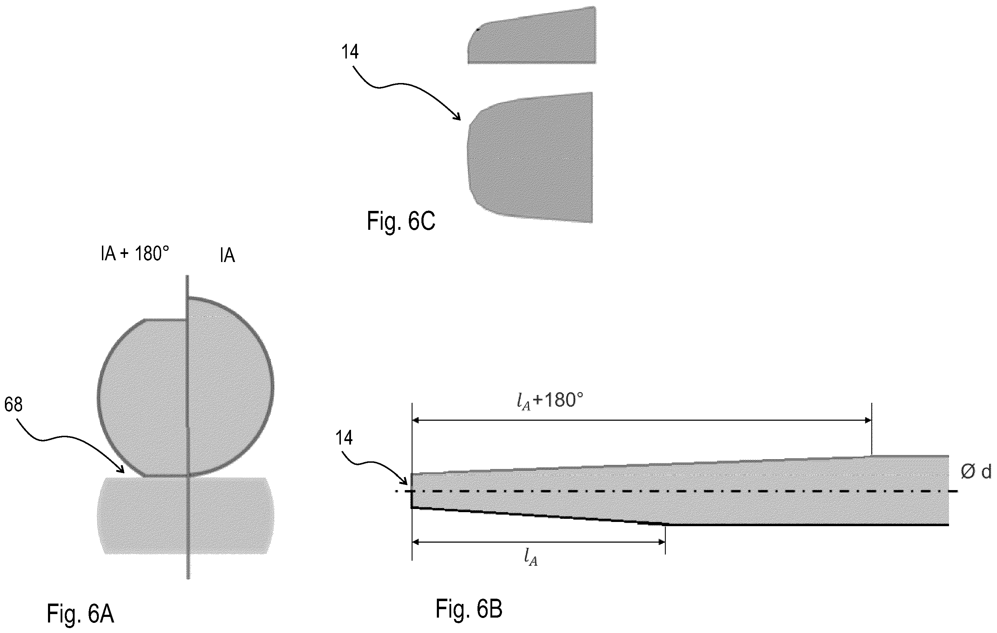

The first length 20 can be selected such that in the wound state (see, e.g., Fig. 1), the first end coil section 10 extends along more than one winding 3, particularly at least along 5/4 windings 3. In terms of degrees, the first end coil section 10 can at least extend along 450°. The first length 20 can at least be 450° (also see Fig. 6B).

The second length 22 can be selected such that in the wound state, the second end coil section 12 extends along more than one winding 3, particularly at least along 5/4 windings 3. In terms of degrees, the second end coil section 12 can at least extend along 450°. The second length 22 can at least be 450°.

In an embodiment, the first length 20 is between 5/4 windings 3 and 7/4 windings 3. In an embodiment, the second length 22 is between 5/4 windings 3 and 7/4 windings 3. In an embodiment, the first length 20 is smaller than 30% of the total length of the spring rod 50 (extension of the spring rod 50 between the first tip 14 and the second tip 16, see, e.g., Fig. 1). In an embodiment, the second length 22 is smaller than 30% of the total length of the spring rod 50. In an embodiment, the first length 20 and the second length 22 are each smaller than 30% of the total length of the spring rod 50.

The first end coil section 10 can extend over portions of two consecutive windings 3 (see, e.g., Figs 1, 2, 5B). The second end coil section 12 can extend over portions of two consecutive windings 3 (see, e.g., Figs 1, 2). The first end coil section 10 can extend between one-and-a-quarter coils 3 and one-and-three-quarters coils 3. The second end coil section 12 can extend between one-and-a-quarter coils 3 and one-and-three-quarters coils 3.

The first bottom surface 42 can partially overlap the first top surface 40 in a first overlapping region 68 (Figs 1, 5B, 6A). In particular, the overlap can be along the spring axis L1. The first end coil section 10 can be configured such that a portion 62 of the planished first bottom surface 42 overlaps with a portion 60 of the planished first top surface 40. In the first overlapping region 68, the first bottom surface 42 can be arranged above the first top surface 40. The portion 62 of the first bottom surface 42 can face towards the portion 60 of the first top surface 40 of a previous winding 3. The different portions 60, 62 (portion of the first bottom surface 62; portion of the first top surface 60) of two consecutive windings 3 can face towards each other. The different portions 60, 62 of two consecutive windings 3 can overlap each other, particularly with regard to the spring axis L1.

When the coil compression spring is loaded with a preload force, the portion 60 of the planished first top surface 40 and the portion 62 of the planished first bottom surface 42 can adjoin each other (particularly Figs 1, 2, 6A). The portion 62 of the first bottom surface 42 can be pressed against the portion 60 of the first top surface 40, when the coil compression spring 1 is loaded with the preload force. The portion 62 of the first bottom surface 42 can contact the portion 60 of the first top surface 40, when the coil compression spring 1 is loaded with the preload force F1. When the coil compression spring is loaded with the preload force, the first bottom surface 42 of the first overlapping region 68 can abut the first top surface 40 of the first overlapping region 68 (particularly Figs 1, 2, 6A). The flat surfaces 40, 42 (first bottom surface 42 of the first overlapping region 68 and first top surface 40 of the first overlapping region 68) can establish a surface-to-surface contact.

The surface-to-surface contact can be advantageous, particularly compared to a surface-to-line/point contact which is known from springs of the prior art (see comparison in Fig 6A).

The preload force F1 can be a tare weight. The preload force F1 can be directed along the spring axis L1.

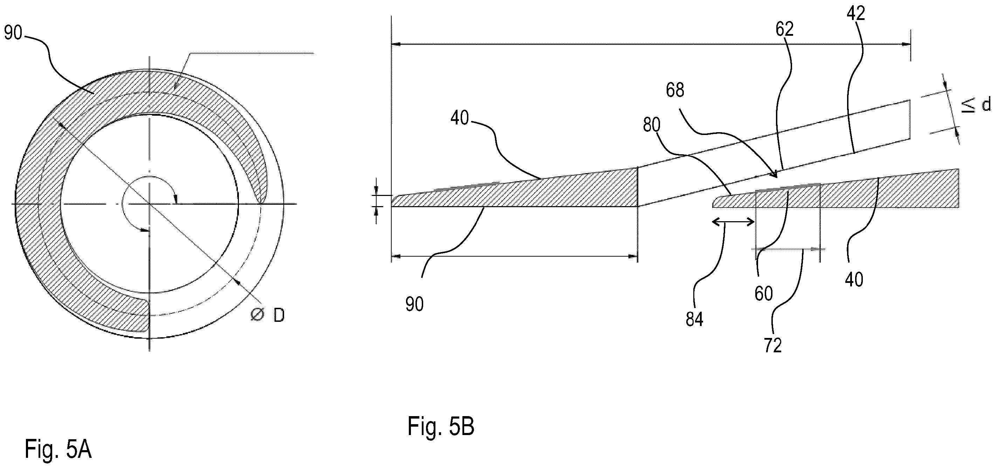

A length 72 of the first overlapping region 68 (first overlap length 72) can extend along the coiling direction C1 of the coil compression spring 1 (Fig. 5B). The first overlap length 72 can be at least 30% of the diameter D1 of the coil compression spring 1. The first overlap length 72 can be at least 30% of one winding 3 of the coil compression spring 1.

A length of the second overlapping region 70 (second overlap length) can extend along the coiling direction C1 of the coil compression spring 1. The second overlap length can be at least 30% of the diameter D1 of the coil compression spring 1. The second overlap length can be at least 30% of one winding 3 of the coil compression spring 1.

The first end coil portion 10 can comprise a first intermediate portion 80. The first intermediate portion 80 can be arranged between the first tip 14 and the first overlapping region 68. The first intermediate portion 80 can connect the first tip 14 and the first overlapping region 68. The first intermediate portion 80 can extend along the coiling direction C1 of the coil compression spring 1. A length 84 of the first intermediate portion 80 (first intermediate length 84) can be 1/3 coil. The first intermediate length 84 can be smaller than 1/3 coil.

The second end coil portion 12 can comprise a second intermediate portion. The second intermediate portion can be arranged between the second tip 16 and the second overlapping region 70. The second intermediate portion can extend along the coiling direction C1 of the coil compression spring 1. A length of the second intermediate portion (second intermediate length) can be 1/3 coil. The second intermediate length can be smaller than 1/3 coil.

The first length 20 and the second length 22 can be equal (Fig. 4). In an embodiment, the tapering of the first end coil section 10 can correspond to the tapering of the second end coil section 12. An absolute slope 35 of the planished first top surface 40 with regard to the central line 5 can be equal to an absolute slope 36 of the planished first bottom surface 42 with regard to the central line 5 (also see, Fig 3B). An absolute slope of the planished second top surface 44 with regard to the central line 5 can be equal to an absolute slope of the planished second bottom surface 46 with regard to the central line 5. The absolute slope 35 of the planished first top surface 40 with regard to the central line 5 can be equal to the absolute slope of the planished second top surface 44 with regard to the central line 5. The absolute slope 36 of the planished first bottom surface 42 with regard to the central line 5 can be equal to the absolute slope of the planished second bottom surface 46 with regard to the central line 5.

In the illustrated embodiment, the absolute slopes 35, 36 relating to the first end coil section 10 can be constant along the entire first lengths 20 (Figs 3, 4). The absolute slopes relating to the second end coil section 12 can be constant along the entire second length 22 (Fig. 4). The absolute slopes 35, 36 can be constant along the entire respective lengths 20, 22. The absolute slopes 35, 36 relating to the first end coil section 10 and the absolute slopes relating to the second end coil section 12 can be equal.

At the first tip 14, a distance between the first top surface 40 and the first bottom surface 42 can be the first height 32. At the second tip 16, a distance between the second top surface 44 and the second bottom surface 46 can be the second height 34. In an embodiment, the first height 32 and the second height 34 are equal.

The first height 32 can be smaller than the central diameter dc. The first height 32 can be about 25% of the central diameter dc. The second height 34 can be smaller than the central diameter dc. The second height 34 can be about 25% of the central diameter dc.

In Fig. 6A, an example of a comparison of the contact in an overlapping region is illustrated in case of a tapered portion with a length corresponding to 3/4 windings (l_{A}; right part of Fig. 6A) and a tapered portion with a length corresponding to 5/4 windings (l_{A}+180°; left part of Fig. 6A) (see Fig. 6B). In the right part of Fig. 6A, a point-to-surface contact (cylinder-to-surface contact) is shown. A protective layer could easily be damaged. In the left part, due to the longer tapering, a surface-to-surface contact can be established. An advantage can be that a respective protective layer is less damaged.

Due to the high surface pressure, the cylinder-to-surface contact (right part of Fig. 6A) can destroy a protective coating of the spring. This leads to corrosion and destroys the coil spring. The increased length of the forged (tapered) portion can achieve a wide surface flushing (left part of Fig. 6A).

In an embodiment, the spring rod 50 can be rounded at the first tip 14 and/or at the second tip 16 (Fig. 6C).

For use, the coil compression spring 1 can be further processed. A large mounting surface 90 (machined surface) of the coil compression spring 1 can be provided, for instance by milling. For providing the large mounting surface 90 a section of the first bottom surface 42 can be milled off (see Fig. 5A). For providing the large mounting surface 90 a section of the second top surface 44 can be milled off.

## Claims

1. A coil compression spring (1) for a suspension of a vehicle, the coil compression spring (1) comprising, along its coiling direction (C1), a first end coil section (10) having a first tip (14), a second end coil section (12) having a second tip (16), and a central coil section (18) connecting the first end coil section (10) and the second end coil section (12),
wherein the coil compression spring (1) is formed by a wound spring rod (50) extending from the first tip (14) to the second tip (16) along the coiling direction (C1),
wherein the central section (18) has a circular cross section with a central diameter (dc),
wherein the first end coil section (10) has a first length (20) and continuously tapers along the first length (20) from the central section (18) towards the first tip (14) such that the first end coil section (10) comprises a planished first top surface (40) and a planished first bottom surface (42), and wherein the second end coil section (12) has a second length (22) and continuously tapers along the second length (22) from the central section (18) towards the second tip (16) such that the second end coil section (12) comprises a planished second top surface (44) and a planished second bottom surface (46),
wherein the first length (20) of the first end coil section (10) extends along more than one winding (3) of the coil compression spring (1) and at most two windings (3) of the coil compression spring (1), so that the first bottom surface (42) partially overlaps the first top surface (40) in a first overlapping region (68), wherein a portion (60) of the planished first top surface (40) and a portion (62) of the planished first bottom surface (42) adjoin each other, when the coil compression spring (1) is loaded with a preload force,
wherein the second length (22) of the second end coil section (12) extends along more than one winding (3) of the coil compression spring (1) and at most two windings (3) of the coil compression spring (1), so that the second bottom surface (46) partially overlaps the second top surface (44) in a second overlapping region (70), wherein a portion of the planished second top surface and a portion of the planished second bottom surface adjoin each other, when the coil compression spring is loaded with the preload force.

2. The coil compression spring (1) of claim 1, wherein the first length (20) of the first end coil section (10) extends along at least 13/12 windings (3) of the coil compression spring (1), particularly along at least 7/6 windings (3) of the coil compression spring (1), particularly at least 5/4 windings (3) of the coil compression spring (1), and at most 23/12 windings (3) of the coil compression spring (1), particularly at most 11/6 windings (3) of the coil compression spring (1), particularly at most 7/4 windings (3) of the coil compression spring (1),
and/or
wherein the second length (22) of the second end coil section (12) extends along at least 13/12 windings (3) of the coil compression spring (1), particularly along at least 7/6 windings (3) of the coil compression spring (1), particularly at least 5/4 windings (3) of the coil compression spring (1), and at most 23/12 windings (3) of the coil compression spring (1), particularly at most 11/6 windings (3) of the coil compression spring (1), particularly at most 7/4 windings (3) of the coil compression spring (1).

3. The coil compression spring (1) of claim 1 or 2, wherein a first height (32) of the first end coil section (10) at the first tip (14) is between 20% and 30% of the central diameter (dc) particularly between 22% and 28% of the central diameter (dc), particularly 25% of the central diameter (dc) and/or
a second height (34) of the second end coil section (12) at the second tip (16) is between 20% and 30% of the central diameter (dc), particularly between 22% and 28% of the central diameter (dc), particularly 25% of the central diameter (dc).

4. The coil compression spring (1) of one of claims 1 to 3, wherein a length (72) of the first overlapping region (68) is at least 1/3 of median spring diameter (D1) of the coil compression spring (1), when the coil compression spring (1) is loaded with the preload force and/or
wherein a length of the second overlapping region is at least 1/3 of a median spring diameter (D1) of the coil compression spring (1), when the coil compression spring (1) is loaded with the preload force.

5. The coil compression spring (1) of one of claims 1 to 4, wherein the coil compression spring (1) is configured such that it has a linear spring characteristic, particularly a linear spring characteristic between minimum and maximum operating spring force.

6. The coil compression spring (1) of one of claims 1 to 5, wherein the first end coil section (10) monotonously tapers from the central section (18) towards the first tip (14), particularly strictly monotonously tapers from the central section (18) towards the first tip (14) and/or
wherein the second end coil section (12) monotonously tapers from the central section (18) towards the second tip (16), particularly strictly monotonously tapers from the central section (18) towards the second tip (16).

7. The coil compression spring (1) of one of claims 1 to 6, wherein the first end coil section (10) has a trapezoid shape, particularly an equilateral trapezoid shape and/or wherein the second end coil section (12) has a trapezoid shape, particularly an equilateral trapezoid shape.

8. The coil compression spring (1) of one of claims 1 to 7, wherein the first end coil section (10) comprises a first intermediate portion (80) arranged between the first tip (14) and the first overlapping region (68), wherein the first intermediate portion (80) is equal or smaller than 1/3 of one coiling (3), and/or wherein the second end coil section (12) comprises a second intermediate portion arranged between the second tip (16) and the second overlapping region, wherein the second intermediate portion is equal or smaller than 1/3 of one coiling (3).

9. The coil compression spring (1) of one of claims 1 to 8, wherein the coil compression spring (1) extends along a spring axis (L1), wherein a height (H1) of the coil compression spring (1) along the spring axis (L1) is between 50 mm and 400 mm, when the coil compression spring (1) is loaded with a maximum load, and/or
wherein the height (H1) of the coil compression spring (1) is between 100 mm and 600 mm, when the coil compression spring (1) is loaded with the tare weight, and/or
wherein the height (H1) of the coil compression spring (1) is between 150 mm and 1000 mm, when the coil compression spring (1) is unloaded.

10. The coil compression spring (1) of one of claims 1 to 9, wherein the coil compression spring (1) extends along a spring axis (L1) and wherein an outer diameter (D2) of the coil compression spring (1) is constant along the spring axis (L1).

11. The coil compression spring (1) of one of claims 1 to 10, wherein the portion (60) of the planished first top surface (40) and the portion (62) of the planished first bottom surface (42) establish a flush closure, when the coil compression spring (1) is loaded with the preload force, and wherein the portion of the planished second top surface and the portion of the planished second bottom surface establish a further flush closure, when the coil compression spring (1) is loaded with the preload force.

12. The coil compression spring (1) of one of claims 1 to 11, wherein the central diameter (dc) is between 50 mm and 600 mm, particularly between 75 mm and 500 mm, particularly between 100 mm and 300 mm.

13. A method for producing a coil compression spring (1) according to any of the claims 1 to 12, comprising:
- providing a spring rod (50), comprising a first tip (14), a second tip (16), and a central section (18) connecting the first tip (14) and the second tip (16),
- generating a forged spring rod by forging a first end coil section (10) of the spring rod (50) and a second end coil section (12) of the spring rod (50) such that the first end section (10) of the forged spring rod has a first length (20) and continuously tapers along the first length (20) from the central section (18) towards the first tip (14) such that the first end coil section (20) comprises a planished first top surface (40) and a planished first bottom surface (42), and such that the second end coil section (12) has a second length (22) and continuously tapers along the second length (22) from the central section (18) towards the second tip (16) such that the second end coil section comprises a planished second top surface (44) and a planished second bottom surface (46),
- heating the forged spring rod,
- coiling the forged spring rod (50) to form the coil compression spring (1), such that more than one winding (3) of the coil compression spring (1) and at most two windings (3) of the coil compression spring (1) are formed by the first end coil section (10) and more than one winding (3) of the coil compression spring (1) and at most two windings (3) of the coil compression spring (1) are formed by the second end coil section (12).

14. A running gear of a vehicle comprising at least one coil compression spring (1) according to any of the claims 1 to 13.

15. A vehicle comprising at least one coil compression spring (1) according to any of the claims 1 to 13 and/or at least one running gear according to claim 14.
